# EUROPEAN PATENT SPECIFICATION

(11) **EP 3 070 826 B1**
(45) Date of publication and mention of the grant of the patent: **04.03.2020**
(21) Application number: 15275074.1
(22) Date of filing: 18.03.2015
(51) Int. Cl.: H02M 1/15, H02M 7/49, H02M 1/00, H02M 7/483

(54) **VOLTAGE SOURCE CONVERTER**
SPANNUNGSQUELLENUMRICHTER
CONVERTISSEUR DE SOURCE DE TENSION

(43) Date of publication of application: 21.09.2016
(73) Proprietor: General Electric Technology GmbH, 5400 Baden (CH)
(72) Inventor: OATES, Colin Donald Murray, Brocton Stafford ST17 0TL (GB); TRAINER, David Reginald, Alvaston Derby DE24 0AQ (GB); WHITEHOUSE, Robert Stephen, Stafford ST17 0JU (GB); CHIVITE-ZABALZA, Francisco Javier, Stafford ST17 4XQ (GB)
(74) Representative: Brevalex

(56) References cited:
- EP-A1- 2 755 315
- US-A1- 2013 128 629
- US-A1- 2013 182 467

## Description

This invention relates to a voltage source converter.

In power transmission networks alternating current (AC) power is converted to direct current (DC) power for transmission via overhead lines, under-sea cables, underground cables, and so on. This conversion to DC power removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. A converter, such as a voltage source converter, provides the required conversion between AC power and DC power within the network.

US 2013/128629 describes a voltage source converter comprising first and second DC terminals for connection in use to a DC network, three phase elements and at least one auxiliary converter connected between the first and second DC terminals. Each phase element includes a plurality of primary switching elements and at least one AC terminal for connection to a respective phase of a multi-phase AC network, the plurality of primary switching elements being controllable to facilitate power conversion between the AC and DC networks. The or each auxiliary converter is operable to act as a waveform synthesizer to modify a first DC voltage presented to the DC network so as to minimise ripple in the DC voltage.

EP 2755315 describes a voltage source converter comprising a converter limb, extending between first and second DC terminals and having primary and secondary limb elements connected in parallel between the first and second DC terminals. The primary limb element includes first and second primary limb element portions separated by a third terminal, the third terminal being connectable to an AC electrical network. Each primary limb element portion including at least one primary switching element configured to switch the corresponding primary limb element portion into and out of circuit between a respective one of the DC terminals and the third terminal. The secondary limb element includes first and second secondary limb element portions separated by a junction, each secondary limb element portion including a DC side chain-link converter including a plurality of series-connected modules. Each module of each chain-link converter includes at least one secondary switching element and at least one energy storage device. The converter limb further includes a connection interconnecting the third terminal and the junction to form a star configuration in which a first branch of the star configuration includes the connection, a second branch of the star configuration includes the first secondary limb element portion, a third branch of the star configuration includes the second secondary limb element portion and the junction defines a mid-point of the star configuration. A control unit controls the switching of each primary switching element to switch the corresponding primary limb element portion into and out of circuit between the corresponding DC terminal and the third terminal to selectively transfer power between the AC and DC electrical networks via each of the primary limb element portions. The control unit further controls the switching of the or each secondary switching element in each module of each DC side chain-link converter to control the configuration of an AC voltage waveform at the third terminal.

According to an aspect of the invention there is provided a voltage source converter comprising first and second DC terminals for connection to a DC network, the voltage source converter including a plurality of limbs connected in series between the first and second DC terminals, each limb including:
a phase element including a plurality of switching elements switchable to selectively interconnect a DC side voltage at a DC side of the phase element and an AC side voltage at an AC side of the phase element;
a DC side sub-converter connected to the DC side of the phase element, the DC side sub-converter configured to be operable as a waveform synthesizer to control the DC side voltage so as to form a DC voltage for presentation to the DC network; and
an AC side sub-converter connected to the AC side of the phase element, the AC side sub-converter configured to be operable as a waveform synthesizer to control the AC side voltage so as to form a or a respective AC phase voltage for presentation to a or a respective AC phase of an AC network,
wherein the voltage source converter includes a controller programmed to selectively coordinate the operation of the DC and AC side sub-converters as the respective waveform synthesizers to simultaneously: synthesize one or more selected harmonic voltage components to control the or each DC side voltage so as to present a constant or substantially constant DC voltage to the DC network; and cancel the or each selected harmonic voltage component from the or each AC side voltage so as to present a or a respective AC phase voltage free of the or each selected harmonic voltage component to the corresponding AC phase of the AC network;
the voltage source converter being characterised in that each limb further includes a winding connected in series with the AC side sub-converter (39) at the AC side of the corresponding phase element, each winding magnetically coupled to a respective one of a plurality of additional windings, and the plurality of additional windings are electrically interconnected in a daisy chain arrangement, preferably a delta arrangement.

The coordination of the operation of the DC and AC side sub-converters as the respective waveform synthesizers in accordance with the invention not only permits presentation of a constant or substantially constant DC voltage to the DC network to provide a stable and reliable connection between the voltage source converter and the DC network, but also facilitates cancellation of the or each selected harmonic voltage component from the or each AC side voltage to enable the shaping of the AC phase voltage(s) to transfer high quality power between the AC and DC networks.

In addition the coordination of the operation of the DC and AC side sub-converters as the respective waveform synthesizers in accordance with the invention establishes a reliable operational relationship between the DC and AC side sub-converters, which in turn permits optimisation of the DC and AC side sub-converters to perform their respective functions, thus providing savings in terms of the size, weight and cost of the voltage source converter.

Moreover the arrangement of the AC side sub-converter(s) at the AC side(s) of the phase element(s) means that the AC side sub-converter(s) may optionally be operated to provide the voltage source converter with additional functionality.

The provision of the plurality of additional windings in the daisy chain arrangement results in each winding having a low or zero impedance at one or more harmonic frequencies, which permits the plurality of additional windings to act as a filter to certain harmonic components (e.g. zero sequence harmonic components). This allows a corresponding reduction in the rating of each AC side sub-converter, since the AC side sub-converters are no longer required to control the AC side voltages to cancel the or each harmonic component that are filtered by the plurality of additional windings.

It will be appreciated that the operation of the DC and AC side sub-converters as the respective waveform synthesizers may vary, embodiments of which are described as follows.

In one embodiment, synthesis of one or more selected harmonic voltage components to control the or each DC side voltage so as to present a constant or substantially constant DC voltage to the DC network may include the control of the or each DC side voltage to take the form of a voltage waveform constructed from a series of straight line voltage functions. Such a voltage waveform constructed from a series of straight line voltage functions may be a rectified trapezoidal voltage waveform.

The control of the or each DC side voltage to take the form of a voltage waveform constructed from a series of straight line voltage functions makes it straightforward to control the DC voltage presented to the DC network to be constant or substantially constant.

In a further embodiment, the or each selected harmonic voltage component may be a non-zero sequence harmonic voltage component.

The controller may be programmed to selectively operate each DC side sub-converter as a waveform synthesizer to control each DC side voltage so that the time shifts between each two consecutive DC side voltages are equal. The operation of the DC side sub-converters in this manner not only permits generation of a plurality of symmetrical DC side voltages which simplifies the formation of the DC voltage presented to the DC network, but also permits generation of a plurality of symmetrical AC side voltages which simplifies the formation of the AC phase voltages presented to the AC network.

The controller may be programmed to selectively operate each DC side sub-converter as a waveform synthesizer to control each DC side voltage so as to generate a plurality of imbalanced DC side voltages. The operation of the DC side sub-converters in this manner permits generation of a plurality of imbalanced AC side voltages that may be configured to compensate for an imbalance between the AC phase voltages, which may arise as a result of a fault in the AC network.

Preferably the synthesis of one or more selected harmonic voltage components to control each DC side voltage so as to present a constant or substantially constant DC voltage to the DC network includes the control of each DC side voltage so as to generate the plurality of imbalanced DC side voltages. This permits the connection of the voltage source converter to the DC network to remain unaffected during the operation of the voltage source converter to compensate for an imbalance in the AC phase voltages.

The or each winding may be in the form of a transformer winding or a reactor.

In such embodiments of the invention, each limb may further include a reactor connected in series with the corresponding winding. The provision of the series-connected reactors provides control over the currents in the respective windings, and thereby acts to limit the rise in harmonic current in the respective windings when the plurality of additional windings acts as a filter to certain harmonic components.

In further such embodiments of the invention, the controller may be programmed to selectively operate each AC side sub-converter as a waveform synthesizer to control the current in the corresponding winding so as to limit or block the circulation of one or more harmonic current components (e.g. one or more zero sequence harmonic current components) between the AC phases. The operation of the AC side sub-converters in this manner provides control over the currents in the respective windings, and thereby acts to limit the rise in harmonic current in the respective windings when the plurality of additional windings acts as a filter to certain harmonic components.

In further embodiments of the invention, each limb may further include a winding connected at the AC side of the corresponding phase element, each winding is magnetically coupled to a respective one of a plurality of additional windings, and the plurality of additional windings are electrically connected in parallel. In still further embodiments of the invention, each limb may further include a winding connected at the AC side of the corresponding phase element, and each winding is magnetically coupled to at least one other of the plurality of windings.

The configuration of the windings at the AC sides of the phase elements in this manner provides another way of filtering one or more harmonic components by providing a high impedance to the or each harmonic component to be filtered. This also allows a corresponding reduction in the rating of each AC side sub-converter.

Optionally the controller may be programmed to selectively operate each AC side sub-converter as a waveform synthesizer to control the voltage across the corresponding winding to exchange power between the AC phases via the magnetically coupled windings. The exchange of power via the magnetically coupled windings provides a compact and reliable means of exchanging power between the AC phases.

Exchanging power between the AC phases via the magnetically coupled windings may include compensating for an imbalance between the AC phase voltages. Such compensation not only may be applied to the regulation of the energy levels of the AC side sub-converters that have been adversely affected by the imbalance between the AC phase voltages, but also reduces or eliminates the need for the DC side sub-converters to generate the plurality of imbalanced DC side voltages.

The control of the voltage across the corresponding winding to exchange power between the AC phases via the magnetically coupled windings may include injection of a zero sequence harmonic voltage component into the voltage across the corresponding winding. The use of a zero sequence harmonic voltage component can be readily prevented from interfering with the AC network. For example, one way of preventing the zero sequence harmonic voltage component from interfering with the AC network is by using the daisy chain arrangement to couple the various windings.

The controller may be programmed to selectively operate the or each AC side sub-converter as a waveform synthesizer to control the or each AC side voltage so as to drive the voltage across the corresponding plurality of switching elements to a zero or substantially zero value during the switching of the corresponding plurality of switching elements and during the exchange of reactive power between the voltage source converter and the AC network. This permits soft-switching of the corresponding plurality of switching elements, which would otherwise be difficult due to the exchange of reactive power between the voltage source converter and the AC network.

The controller may be programmed to operate the or each AC side sub-converter to provide a corresponding compensation voltage to vary a phase difference between the corresponding AC side and AC phase voltages so as to maintain a zero net change in energy level of the AC side sub-converter over a power cycle.

The arrangement and configuration of the components of the voltage source converter may vary, embodiments of which are described as follows.

The or each DC side sub-converter may be connected in parallel with the corresponding phase element between the first and second DC terminals.

In embodiments of the invention employing a plurality of limbs, the plurality of limbs may be connected in series between the first and second DC terminals so that the DC side voltages combine to form a summed DC voltage for presentation to the DC network.

The plurality of switching elements in the or each phase element may include two parallel-connected pairs of series-connected switching elements. A respective junction between each pair of series-connected switching elements may define a respective AC terminal for connection to the corresponding AC phase of the AC network. The or each AC side sub-converter may be connected in series with one or both of the corresponding AC terminals.

Each sub-converter may be a multilevel sub-converter.

Each sub-converter may include at least one module. The or each module may include at least one switching element and at least one energy storage device. The or each switching element and the or each energy storage device in the or each module may be arranged to be combinable to selectively provide a voltage source.

The inclusion of the or each module in each sub-converter provides a reliable means of operating each sub-converter as a waveform synthesizer.

The or each module in each sub-converter may vary in configuration.

The or each switching element and the or each energy storage device in a given module may be arranged to be combinable to selectively provide a unidirectional voltage source. For example, the or each module in each sub-converter may include a pair of switching elements connected in parallel with an energy storage device in a half-bridge arrangement to define a 2-quadrant unipolar module that can provide zero or positive voltage and can conduct current in two directions.

The or each switching element and the or each energy storage device in a given module may be arranged to be combinable to selectively provide a bidirectional voltage source. For example, the or each module in each sub-converter may include two pairs of switching elements connected in parallel with an energy storage device in a full-bridge arrangement to define a 4-quadrant bipolar module that can provide negative, zero or positive voltage and can conduct current in two directions.

Each sub-converter may include a plurality of series-connected modules that defines a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. As such the chain-link converter is capable of providing a wide range of complex voltage waveforms, which facilitates synthesis of the or each selected harmonic voltage component by each DC side sub-converter and cancellation of the or each selected harmonic voltage component by each AC side sub-converter.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

The or each switching element may further include a passive current check element that is connected in anti-parallel with the or each switching device.

The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy, e.g. a capacitor, fuel cell or battery.

Preferred embodiments of the invention will now be described, by way of non-limiting examples, with reference to the accompanying drawings in which:
Figure 1 shows, in schematic form, a voltage source converter according to a first embodiment of the invention;
Figures 2a to 2c show, in schematic form, components of the voltage source converter of Figure 1;
Figures 3a to 3d illustrate, in graphical form, the operation of the voltage source converter of Figure 1;
Figure 4 illustrates, in graphical form, a vector diagram depicting the operation of the voltage source converter of Figure 1;
Figure 5 illustrates, in graphical form, a vector diagram of a first exemplary set of operating points of the voltage source converter of Figure 1;
Figures 6a and 6b illustrate, in graphical form, the operation of the voltage source converter of Figure 1 with reference to the vector diagram of Figure 5;
Figure 7 illustrates, in graphical form, a vector diagram of a second exemplary set of operating points of the voltage source converter of Figure 1;
Figure 8a and 8b illustrate, in graphical form, the operation of the voltage source converter of Figure 1 with reference to the vector diagram of Figure 7;
Figure 9 shows, in schematic form, a voltage source converter according to a second embodiment of the invention;
Figure 10 shows, in schematic form, a voltage source converter according to a third embodiment of the invention; and
Figure 11 shows, in schematic form, a voltage source converter according to a fourth embodiment of the invention.

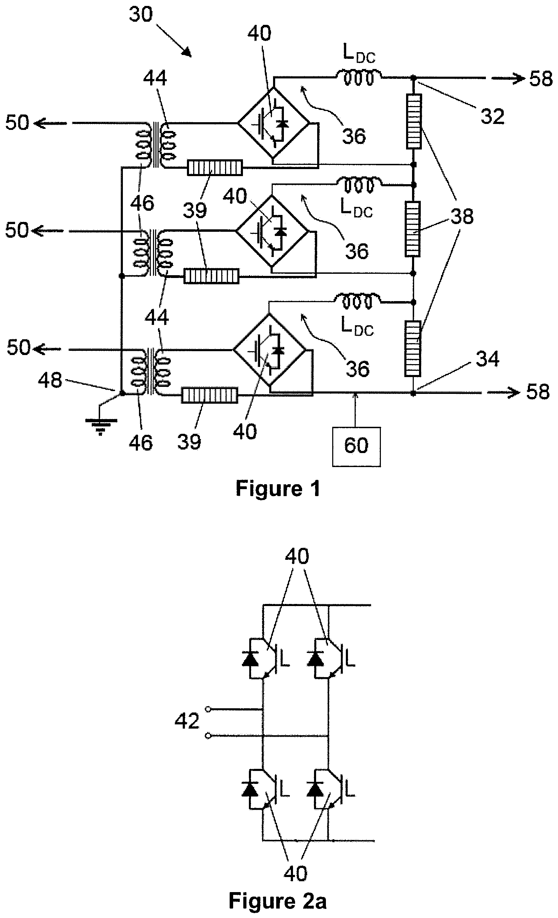

A first voltage source converter according to a first embodiment of the invention is shown in Figure 1 and is designated generally by the reference numeral 30.

The first voltage source converter 30 comprises first and second DC terminals 32,34 and a plurality of limbs. Each limb includes a phase element 36, a DC side sub-converter 38, and an AC side sub-converter 39.

Each phase element 36 includes two parallel-connected pairs of series-connected switching elements 40, as shown in Figure 2a. A respective junction between each pair of series-connected switching elements 40 defines a respective AC terminal. The AC terminals of each phase element 36 define the AC side 42 of that phase element 36. In the embodiment shown, each phase element 36 includes a DC side reactor L_{DC} connected in series with the plurality of switching elements 40. The DC side reactor L_{DC} may be a discrete passive component or may be a stray inductance contributed by the power circuit interconnections and busbars.

Each DC side sub-converter 38 is connected in parallel with the corresponding phase element 36 between the first and second DC terminals 32,34.

The plurality of limbs is connected in series between the first and second DC terminals 32,34. In use, the first and second DC terminals 32,34 are respectively connected to first and second terminals of a DC network 58, the first terminal of the DC network 58 carrying a positive DC voltage, the second terminal of the DC network 58 carrying a negative DC voltage.

The configuration of the limbs as set out above means that, in use, a respective DC side voltage appears across each phase element 36. The series connection of the limbs between the first and second DC terminals 32,34 means that, in use, the DC side voltages combine to form a summed DC voltage that is presented to the DC network 58.

The AC terminals of each phase element 36 are interconnected via a respective one of the AC side sub-converters 39 and a respective one of a plurality of open secondary transformer windings 44. More specifically, in respect of each phase element 36, the AC side sub-converter 39 and the secondary transformer winding 44 are connected in series between the AC terminals.

Each secondary transformer winding 44 is mutually coupled with a respective one of a plurality of primary transformer windings 46. The plurality of primary transformer windings 46 are connected in a star configuration in which a first end of each primary transformer winding 46 is connected to a common junction 48 and a second end of each primary transformer winding 46 is connected to a respective phase of a three-phase AC network 50. In this manner, in use, the AC side 42 of each phase element 36 is connected to a respective phase of a three-phase AC network 50. In other embodiments, it is envisaged that the plurality of primary transformer windings 46 may be connected in a closed delta arrangement.

The configuration of the phase elements 36 as set out above means that, in use, a respective AC side voltage appears across the AC terminals of each phase element 36. The common junction 48 defines a neutral point of the plurality of primary transformer windings 46, and is grounded.

As such, in use, each phase element 36 interconnects a DC side voltage and an AC side voltage. In other embodiments, it is envisaged that each phase element may include a plurality of switching elements with a different configuration to interconnect a DC side voltage and an AC side voltage.

Each sub-converter 38,39 includes a plurality of modules 52.

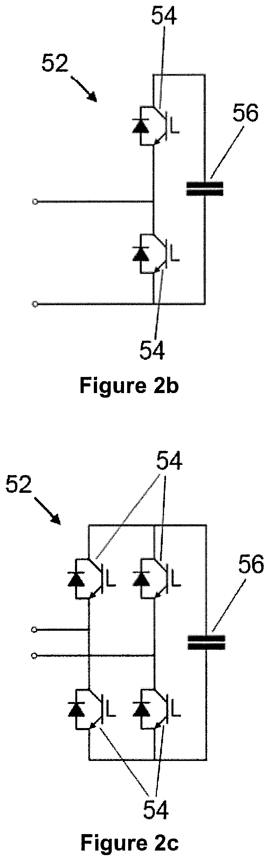

Each module 52 of each DC side sub-converter 38 includes a pair of switching elements 54 and an energy storage device 56 in the form of a capacitor. In each DC side sub-converter 38, the pair of switching elements 54 is connected in parallel with the capacitor 56 in a half-bridge arrangement to define a 2-quadrant unipolar module that can provide zero or positive voltage and can conduct current in two directions, as shown in Figure 2b.

Each module 52 of each AC side sub-converter 39 includes two pairs of switching elements 54 and an energy storage device 56 in the form of a capacitor. In each AC side sub-converter 39, the pairs of switching elements 54 are connected in parallel with the capacitor 56 in a full-bridge arrangement to define a 4-quadrant bipolar module that can provide negative, zero or positive voltage and can conduct current in two directions, as shown in Figure 2c.

Each switching element 40,54 includes a single switching device. Each switching element 40,54 further includes a passive current check element that is connected in anti-parallel with each switching device.

Each switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is further envisaged that, in other embodiments of the invention, each capacitor may be replaced by another type of energy storage device that is capable of storing and releasing energy, e.g. a fuel cell or battery.

The plurality of series-connected modules 52 in each sub-converter 38,39 defines a chain-link converter.

The capacitor 56 of each module 52 is selectively bypassed or inserted into the chain-link converter by changing the states of the switching elements 54. This selectively directs current through the capacitor 56 or causes current to bypass the capacitor 56 so that the module 52 provides a zero or positive voltage in the case of each DC side sub-converter 38, and the module 52 provides a negative, zero or positive voltage in the case of each AC side sub-converter 39.

The capacitor 56 of the module 52 is bypassed when the switching elements 54 in the module 52 are configured to form a short circuit in the module 52. This causes current in the chain-link converter to pass through the short circuit and bypass the capacitor 56, and so the module 52 provides a zero voltage, i.e. the module 52 is configured in a bypassed mode.

The capacitor 56 of the module 52 is inserted into the chain-link converter when the switching elements 54 in the module 52 are configured to allow the current in the chain-link converter to flow into and out of the capacitor 56. The capacitor 56 then charges or discharges its stored energy so as to provide a non-zero voltage, i.e. the module 52 is configured in a non-bypassed mode.

It is envisaged that, in other embodiments of the invention, each module may be replaced by another type of module that includes at least one switching element and at least one energy storage device, the or each switching element and the or each energy storage device in the or each module arranged to be combinable to selectively provide a voltage source.

The structure of the chain-link converter permits build-up of a combined voltage across the chain-link converter, which is higher than the voltage available from each of its individual modules 52, via the insertion of the energy storage devices 56 of multiple modules 52, each providing its own voltage, into the chain-link converter. In this manner switching of each switching element 54 in each module 52 causes the chain-link converter to provide a stepped variable voltage source, which permits the generation of a voltage waveform across the chain-link converter using a step-wise approximation. As such each chain-link converter is capable of providing a wide range of complex voltage waveforms, which enables each sub-converter 38,39 to be operable as a waveform synthesizer.

The parallel connection of the DC side sub-converter 38 and phase element 36 in each limb permits each DC side sub-converter 38 to be operable as a waveform synthesizer to control the corresponding DC side voltage. Such control of the DC side voltage at the DC side of the corresponding phase element 36, together with the switching of the plurality of switching elements 40 of the corresponding phase element 36, results in a corresponding control of the AC side voltage at the AC side 42 of the corresponding phase element 36.

The series connection of the AC side sub-converter 39 and the AC terminals of the phase element 36 in each limb permits each AC side sub-converter 39 to be operable as a waveform synthesizer to control the corresponding AC side voltage to form a respective AC phase voltage that is presented to the respective phase of the AC network 50.

It is envisaged that, in other embodiments of the invention, the configuration of each DC side sub-converter may vary as long as each DC side sub-converter is capable of being selectively operated as a waveform synthesizer to control the corresponding DC side voltage, and the configuration of each AC side sub-converter may vary as long as each AC side sub-converter is capable of being selectively operated as a waveform synthesizer to control the corresponding AC side voltage to form the corresponding AC phase voltage. For example, each sub-converter may be a multilevel converter other than a chain-link converter.

The first voltage source converter 30 further includes a controller 60 programmed to control the operation of the DC and AC side sub-converters 38,39 as the respective waveform synthesizers.

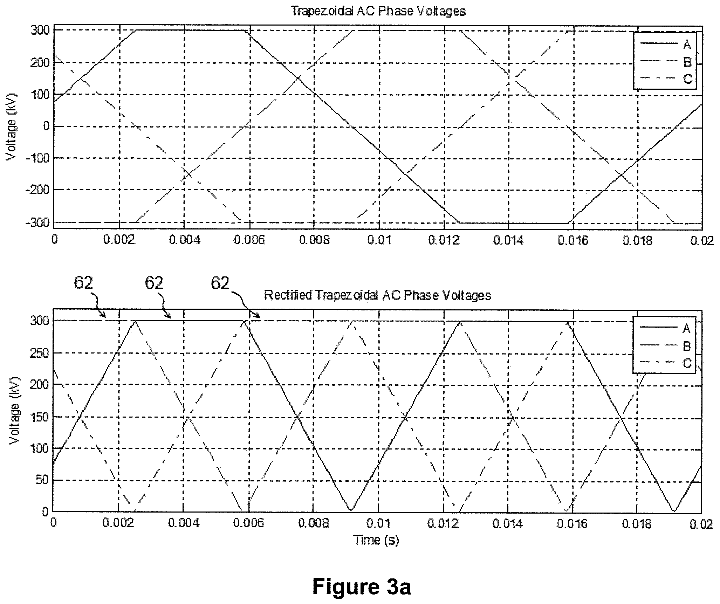

The operation of the first voltage source converter 30 to transfer power between the AC and DC networks 58,50 is described as follows, with reference to Figures 3a to 3d.

Each DC side sub-converter 38 is operated as a waveform synthesizer to synthesise one or more selected harmonic voltage components to control the corresponding DC side voltage to take the form of a voltage waveform constructed from a series of straight line voltage functions.

In the example shown in Figure 3a, the voltage waveform constructed from a series of straight line voltage functions is a rectified trapezoidal voltage waveform 62, which is generated through the synthesis of selected non-zero sequence harmonic voltage components. Each rectified trapezoidal voltage waveform 62 may be generated through calculation of a trapezoidal voltage waveform using a state machine on the basis of a phase value obtained from a phased locked loop or using a truth table, and by rectifying the calculated trapezoidal voltage waveform to provide a reference voltage waveform for each DC side sub-converter 38. The polarity of the calculated trapezoidal voltage waveform provides a reference polarity value for controlling the switching of the plurality of switching elements 40.

The generation of the rectified trapezoidal voltage waveforms 62, together with the switching of the plurality of switching elements 40 of the phase elements 36, therefore results in the generation of a plurality of trapezoidal AC side voltages at the AC sides 42 of the phase elements 36.

Each DC side sub-converter 38 is further operated to control the corresponding DC side voltage so that the time shifts between each two consecutive DC side voltages 62 are equal and so that the phase difference between each two consecutive AC side voltages is 120 electrical degrees so as to be compatible with the three-phase AC network 50.

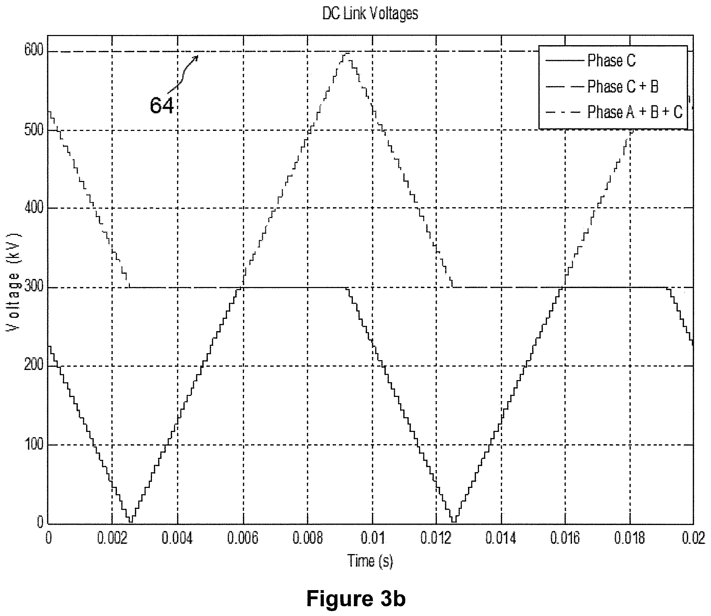

The summation of the plurality of rectified trapezoidal voltage waveforms 62 results in the presentation of a constant DC voltage 64 appearing across the DC terminals 32,34, which is presented to the DC network 50. The build-up of the constant DC voltage 64 is illustrated in Figure 3b in which a first rectified trapezoidal voltage waveform 62 is summed with a second rectified trapezoidal voltage waveform 62 and then further summed with a third rectified trapezoidal voltage waveform 62 to give the constant DC voltage 64. The flow of current in the DC network 50 is regulated by collectively regulating the reference voltage waveforms of the DC side sub-converters against the constant DC voltage 64.

It will be appreciated that other voltage waveforms constructed from a series of straight line voltage functions may be used in place of the rectified trapezoidal voltage waveform 62.

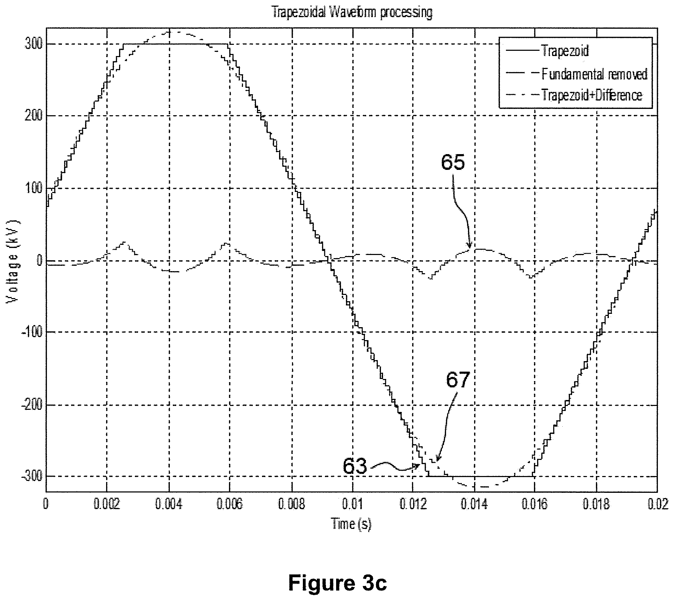

Meanwhile, in coordination with the operation of the corresponding DC side sub-converter 38 to synthesise the selected non-zero sequence harmonic components, each AC side sub-converter 39 is operated as a waveform synthesizer to cancel the selected non-zero sequence harmonic voltage components from the corresponding AC side voltage. More specifically a measurement of each trapezoidal AC side voltage 63 is passed through a notch filter to remove the fundamental voltage waveform so as to output a respective differential value 65, and each AC side sub-converter 39 is operated to synthesize the respective differential value 65 for combination with the respective trapezoidal AC side voltage 63 in order to form the respective AC phase voltage 67, as shown in Figure 3c. This results in the formation of a respective AC phase voltage free of the selected non-zero sequence harmonic voltage components for presentation to the corresponding AC phase of the AC network 50. In particular, in respect of the above-described operation of the first voltage source converter 30, the resulting Total Harmonic Distortion is 0.45%.

Each differential value 65 indicates the number of modules 52 required of each AC side sub-converter 39 in steady-state operation. For example, in Figure 3c, the differential value 65 ranges from -15 kV to +25 kV, thus indicating that twenty five modules each capable of providing a voltage of 1 kV would be required.

The coordination of the operation of the DC and AC side sub-converters 38,39 as the respective waveform synthesizers in this manner therefore not only permits presentation of a constant DC voltage 64 to the DC network 58 to provide a stable and reliable connection between the first voltage source converter 30 and the DC network 58, but also facilitates cancellation of the or each selected harmonic voltage component from each AC side voltage to enable the shaping of the AC phase voltages to transfer high quality power between the AC and DC networks 50,58.

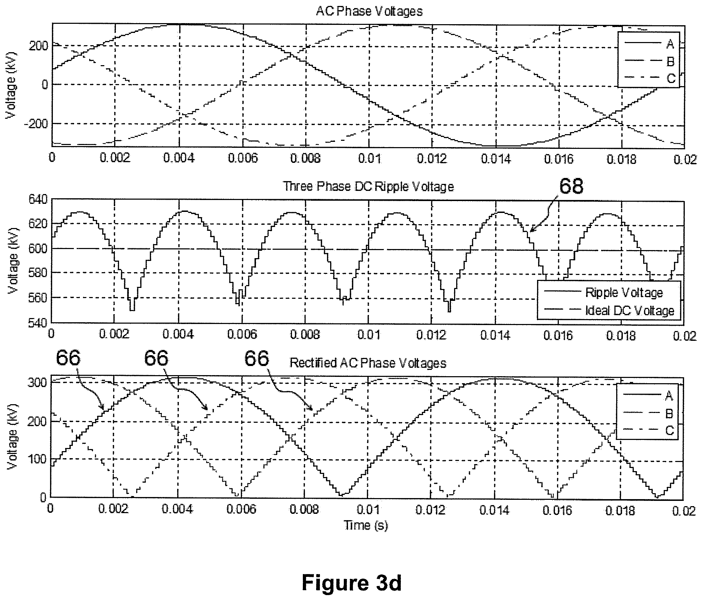

Otherwise the omission of the DC and AC side sub-converters 38,39 from the first voltage source converter 30 results in the presentation of a DC voltage containing DC ripple to the DC network 58, which affects the quality of power transferred between the AC and DC networks 50,58. For example, it can be seen from Figure 3d that the use of sinusoidal AC side voltages and the corresponding rectified sinusoidal voltage waveforms 66 results in the inclusion of DC ripple in the DC voltage 68 presented to the DC network 58.

In addition the coordination of the operation of the DC and AC side sub-converters 38,39 as the respective waveform synthesizers in accordance with the invention establishes a reliable operational relationship between the DC and AC side sub-converters 38,39, which in turn permits optimisation of the DC and AC side sub-converters 38,39 to perform their respective functions, thus providing savings in terms of the size, weight and cost of the first voltage source converter 30.

For example, the DC side sub-converters 38 may be rated specifically to enable the synthesis of the or each selected harmonic voltage component and to support the DC voltage appearing across the DC terminals 32,34, while the AC side sub-converters 39 may be rated specifically to enable the cancellation of the or each selected harmonic voltage component from the respective AC side voltages.

Moreover the arrangement of the AC side sub-converters 39 at the AC sides 42 of the phase elements 36 means that the AC side sub-converters 39 may optionally be operated to provide the first voltage source converter 30 with additional functionality, examples of which are described as follows.

The formation of the AC phase voltages by the AC side sub-converters 39 for presentation to the AC network 50 may further involve the circulation of a fundamental current at quadrature to the AC voltages through the AC side sub-converters 39 and phase elements 36, thus resulting in the addition of reactive power. Meanwhile each AC side sub-converter 39 is operated to maintain a zero net change in energy level so as to neither absorb nor supply real power during the operation of the first voltage source converter 30.

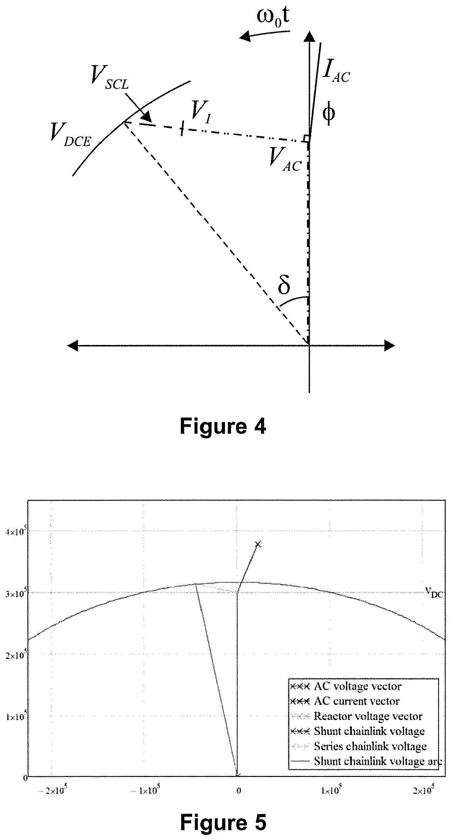

More specifically, with reference to the vector diagram in Figure 4, for a given AC phase voltage V_{AC} that is set as the base angular reference in a rotating reference frame rotating with speed ω₀, the real power and quadrature power demanded by the first voltage source converter 30 give rise to the alternating current I_{AC} at angle φ to the reference frame vertical axis. The first voltage source converter 30 is coupled to the AC network 50 through the transformer with a phase reactance. The alternating current flowing through the phase reactance gives rise to a voltage difference of V₁ across the phase reactance which, neglecting losses, is a vector component π/2 displaced from the current vector. As mentioned above, the rectified trapezoidal voltage waveforms 62 are summed to provide a constant DC voltage 64 that can define the direct current in relation to a given DC voltage of the DC network 58 and, when "unfolded" by the phase elements 36 to form the trapezoidal AC side voltages, must be capable of acting independently of any of the other vectors in the system in terms of magnitude V_{DCE} (as denoted by the arc). Thus the phase δ for each trapezoidal AC side voltage can be seen to be defined by the intersection of the corresponding vector and the projection of the voltage vector for the phase reactance.

In order to compensate for the voltage difference V₁, each AC side sub-converter 39 is operated to provide a corresponding compensation voltage in order to, as each AC phase voltage rises and falls, vary the phase difference between the corresponding AC side and AC phase voltages so as to maintain a zero net change in energy level of the AC side sub-converter 39 over a power cycle.

Figure 5 illustrates a first exemplary set of operating points for the first voltage source converter operating at a positive real power and a positive quadrature power. In Figure 5, the terms "reactor voltage vector" refers to the voltage vector of the phase reactance, the term "shunt chainlink" refers to the DC side sub-converter 38, and the term "series chainlink" refers to the AC side sub-converter 39.

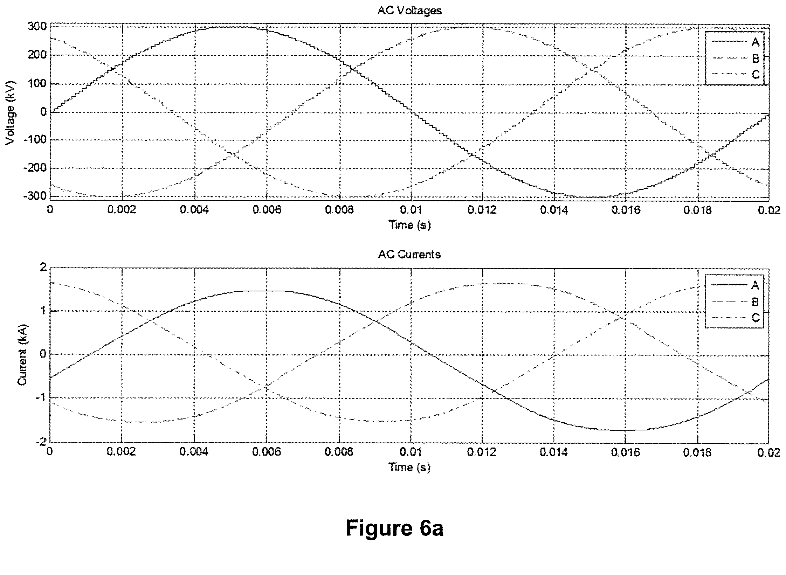

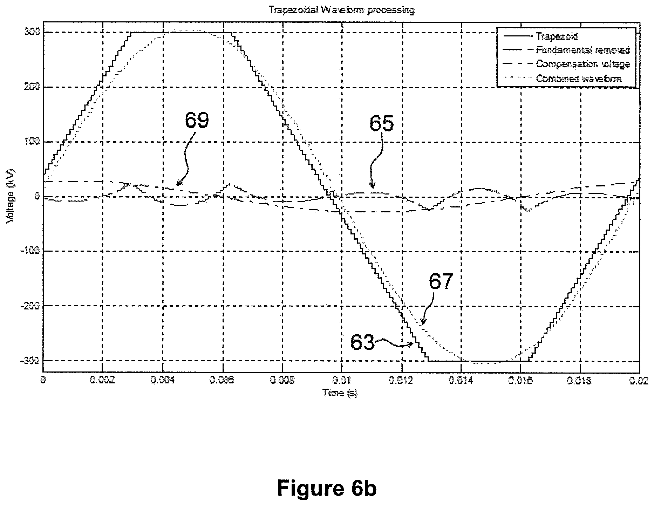

Figure 6a shows the voltages and currents at a point of common coupling for the first voltage source converter 30 operating at 600 MW with 200M VAr corresponding to the vector diagram shown in Figure 5. Figure 6b illustrates the formation of an AC phase voltage through operation of an AC side sub-converter 39 to generate a first compensation voltage 69. It can be seen that there is a phase difference between the trapezoidal AC side voltage 63 and the AC phase voltage 67.

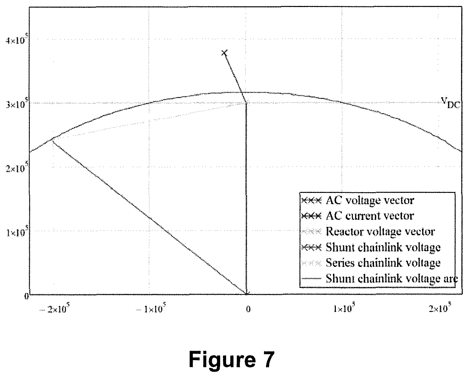

Figure 7 illustrates a second exemplary set of operating points for the first voltage source converter operating at a positive real power and a positive quadrature power. In Figure 7, the terms "reactor voltage vector" refers to the voltage vector of the phase reactance, the term "shunt chainlink" refers to the DC side sub-converter 38, and the term "series chainlink" refers to the AC side sub-converter 39.

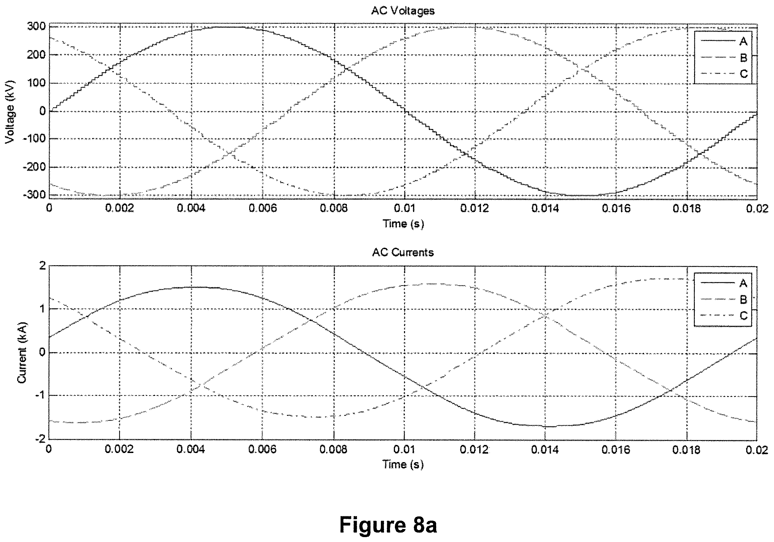

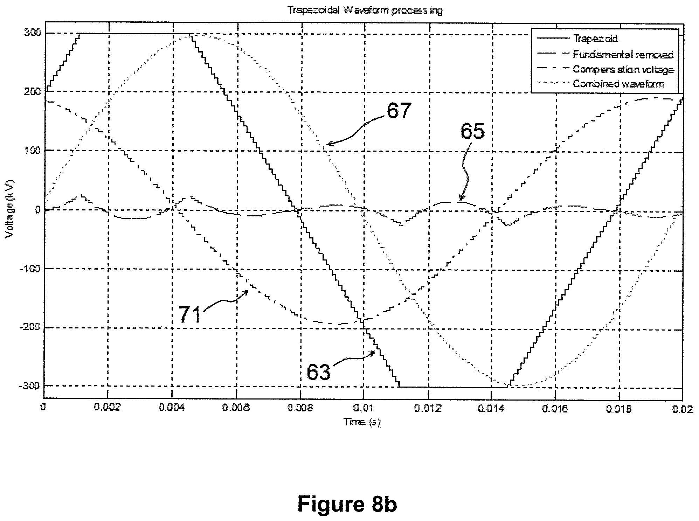

Figure 8a shows the voltages and currents at a point of common coupling for the first voltage source converter 30 operating at 600 MW with -200M VAr corresponding to the vector diagram shown in Figure 7. Figure 8b illustrates the formation of an AC phase voltage through operation of an AC side sub-converter 39 to generate a second compensation voltage. It can be seen that that there is a phase difference between the trapezoidal AC side voltage 63 and the AC phase voltage 67, and the second compensation voltage 71 is relatively larger than the first compensation voltage 69.

It will be appreciated that the ability of each AC side sub-converter 39 to add and subtract voltage steps permits variation in the value of the phase reactance to reduce the required voltage range and optimise the associated losses of the AC side sub-converters 39.

During the occurrence of a fault in the AC network 50, the plurality of AC phase voltages may become imbalanced. Such imbalance between the plurality of AC phase voltages can not only adversely affect the transfer of power between the AC and DC networks 50,58, but also disturb the regulation of the energy levels of the AC side sub-converters 39.

In the event of the presence of a plurality of imbalanced AC phase voltages, the controller may operate each DC side sub-converter 38 as a waveform synthesizer to control each DC side voltage so as to generate a plurality of imbalanced DC side voltages. In this regard the arrangement of each DC side sub-converter 38 in the first voltage source converter 30 permits each DC side sub-converter 38 to control the respective DC side voltage independently of the control of the other DC side voltages by the other DC side sub-converters 38. The magnitude of each DC side voltage can therefore be set to result in the generation of a plurality of imbalanced AC side voltages that is configured to compensate for the imbalance between the AC phase voltages.

Preferably the operation of the DC side sub-converters 38 to enable presentation of a constant DC voltage to the DC network 58 is performed at the same time as the control of each DC side voltage so as to generate the plurality of imbalanced DC side voltages. This permits the connection of the first voltage source converter 30 to the DC network 58 to remain unaffected during the operation of the first voltage source converter 30 to compensate for an imbalance in the AC phase voltages.

The first voltage source converter 30 may be required to exchange reactive power with the AC network 50. Under such circumstances, the resulting discontinuity in each AC phase current means that the stray inductance on the AC side 42 of each phase element 36 of the first voltage source converter 30 requires an infinite AC phase voltage at the instant of the discontinuity, thus preventing the soft-switching of the plurality of switching elements 40 of the phase elements 36.

During the operation of the first voltage source converter 30 to exchange reactive power with the AC network 50, the controller may operate each AC side sub-converter 39 as a waveform synthesizer to control each AC side voltage so as to drive the voltage across each of the plurality of switching elements 40 to a zero or substantially zero value during the switching of the plurality of switching elements 40 of the corresponding phase element 36, thus permitting the soft-switching of the plurality of switching elements 40 of the phase elements 36. Meanwhile the energy storage devices 56 of the AC side sub-converters 39 maintain the flow of the AC phase currents at the AC sides 42 of the phase elements 36.

It will be appreciated that the AC side sub-converters 39 may be rated specifically for the above additional functions, in addition to enabling the cancellation of the or each selected harmonic voltage component from the respective AC side voltages.

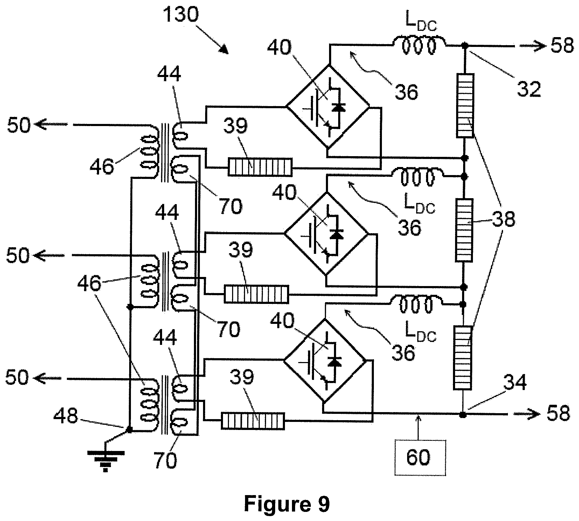

A second voltage source converter 130 according to a second embodiment of the invention is shown in Figure 9 and is designated generally by the reference numeral 130.

The second voltage source converter 130 is similar in structure and operation to the first voltage source converter 30, and like features share the same reference numerals.

The second voltage source converter 130 differs from the first voltage source converter 30 in that, in the second voltage source converter 130, each limb further includes a respective tertiary transformer winding 70 that is magnetically coupled to the corresponding secondary transformer winding 44. The plurality of tertiary transformer windings 70 are electrically interconnected in a delta arrangement.

The provision of the plurality of tertiary transformer windings 70 in the delta arrangement results in each secondary transformer winding 44 having a low or zero impedance at zero-sequence harmonic frequencies, which permits the plurality of tertiary transformer windings 70 to act as a filter to zero-sequence harmonic components. This allows a corresponding reduction in the rating of each AC side sub-converter 39, since the AC side sub-converters 39 are no longer required to control the AC side voltages to cancel any zero sequence harmonic component synthesised by the DC side converters 38.

Optionally each limb may include a respective reactor (not shown) connected in series with the corresponding secondary transformer winding 44. The provision of the series-connected reactors provides control over the currents in the respective secondary transformer windings 44, and thereby acts to limit the rise in harmonic current in the respective secondary transformer windings 44 when the plurality of tertiary transformer windings 70 acts as a filter to the zero-sequence harmonic components.

Further optionally the controller 60 may be programmed to selectively operate each AC side sub-converter 39 as a waveform synthesizer to control the current in the corresponding secondary transformer winding 44 so as to limit or block the circulation of the zero-sequence harmonic components between the AC phases. The operation of the AC side sub-converters 39 in this manner provides control over the currents in the respective secondary transformer windings 44, and thereby acts to limit the rise in harmonic current in the respective secondary transformer windings 44 when the plurality of tertiary transformer windings 70 acts as a filter to the zero-sequence harmonic components.

Even further optionally the controller 60 may be programmed to selectively operate each AC side sub-converter 39 as a waveform synthesizer to control the voltage across the corresponding secondary transformer winding 44 to exchange power between the AC phases via the magnetically coupled secondary and tertiary transformer windings 44,70. The exchange of power via the magnetically coupled windings 44,70 provides a compact and reliable means of exchanging power between the AC phases.

Exchanging power between the AC phases via the magnetically coupled windings 44,70 may include compensating for an imbalance between the AC phase voltages. Such compensation not only may be applied to the regulation of the energy levels of the AC side sub-converters 39 that have been adversely affected by the imbalance between the AC phase voltages, but also reduces or eliminates the need for the DC side sub-converters 38 to generate the plurality of imbalanced DC side voltages.

The control of the voltage across the corresponding secondary transformer winding 44 to exchange power between the AC phases via the magnetically coupled windings 44,70 may include injection of a zero sequence harmonic voltage component into the voltage across the corresponding secondary transformer winding 44.

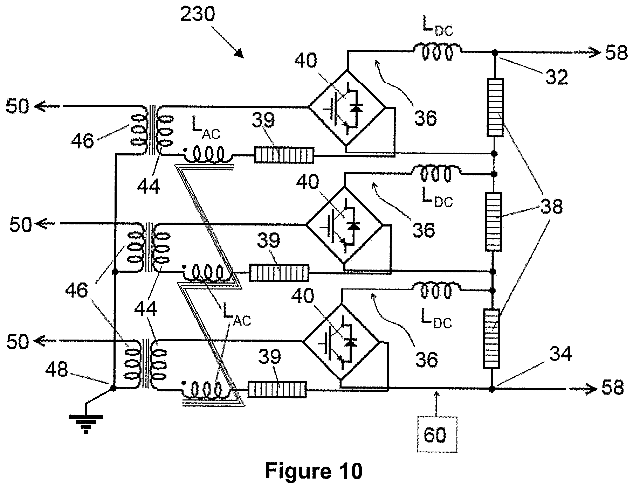

A third voltage source converter 230 according to a third embodiment of the invention is shown in Figure 10 and is designated generally by the reference numeral 230.

The third voltage source converter 230 is similar in structure and operation to the second voltage source converter 130, and like features share the same reference numerals.

The third voltage source converter 230 differs from the second voltage source converter 130 in that, in the third voltage source converter 230, each limb includes a respective AC side reactor L_{AC} connected in series with the corresponding secondary transformer winding 44 and the corresponding AC side sub-converter 39, instead of the respective tertiary transformer winding 70. Each AC side reactor L_{AC} is in the form of a winding that is magnetically coupled to each of the other AC side reactors L_{AC}.

The configuration of the AC side reactors L_{AC} in this manner provides a way of filtering one or more harmonic components by providing a high impedance to the or each harmonic component to be filtered. This also allows a corresponding reduction in the rating of each AC side sub-converter 39.

In this embodiment the exchange of power between the AC phases may be carried out through the controller being programmed to selectively operate each AC side sub-converter 39 as a waveform synthesizer to control the voltage across the corresponding AC side reactor L_{AC} to exchange power between the AC phases via the magnetically coupled AC side reactors L_{AC}.

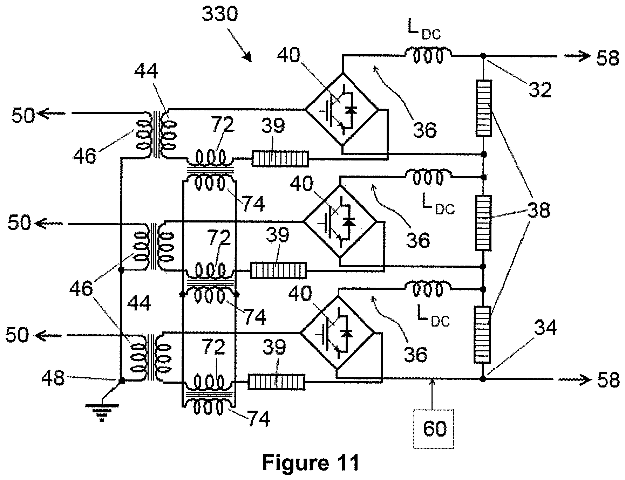

A fourth voltage source converter 330 according to a fourth embodiment of the invention is shown in Figure 11 and is designated generally by the reference numeral 330.

The fourth voltage source converter 330 is similar in structure and operation to the second voltage source converter 130, and like features share the same reference numerals.

The fourth voltage source converter 330 differs from the second voltage source converter 130 in that, in the fourth voltage source converter 330, each limb includes a respective further winding 72 connected in series with the corresponding secondary transformer winding 44 and the corresponding AC side sub-converter 39, instead of the respective tertiary transformer winding 70. Each further winding 72 is magnetically coupled to a respective one of a plurality of additional windings 74, and the plurality of additional windings 74 are electrically connected in parallel.

The configuration of the further and additional windings 72,74 in this manner provides another way of filtering one or more harmonic components by providing a high impedance to the or each harmonic component to be filtered. This also allows a corresponding reduction in the rating of each AC side sub-converter 39.

In this embodiment the exchange of power between the AC phases may be carried out through the controller being programmed to selectively operate each AC side sub-converter 39 as a waveform synthesizer to control the voltage across the corresponding further winding 72 to exchange power between the AC phases via the magnetically coupled further and additional windings 72,74.

In the embodiments shown, the AC side 42 of each phase element 36 is connected to a respective phase of a three-phase AC network 50. It is envisaged that, in other embodiments, the number of limbs in the voltage source converter may vary with the number of phases of a multi-phase AC network, and the AC side of each phase element may be connected to a respective AC phase of the multi-phase phase AC network.

It is envisaged that, in other embodiments of the invention, the voltage source converter may include a single phase limb, whereby the AC side of the phase element is connected to an AC phase of a single-phase AC network.

## Claims

1. A voltage source converter (30) comprising first and second DC terminals (32, 34) for connection to a DC network (58), the voltage source converter (30) including a plurality of limbs connected in series
between the first and second DC terminals (32, 34), each limb
including:
a phase element (36) including a plurality of switching elements (40) switchable to selectively interconnect a DC side voltage at a DC side of the phase element (36) and an AC side voltage at an AC side (42) of the phase element (36);
a DC side sub-converter (38) connected to the DC side of the phase element (36), the DC side sub-converter (38) configured to be operable as a waveform synthesizer to control the DC side voltage so as to form a DC voltage (68) for presentation to the DC network (58); and
an AC side sub-converter (39) connected to the AC side (42) of the phase element (36), the AC side sub-converter (39) configured to be operable as a waveform synthesizer to control the AC side voltage so as to form a or a respective AC phase voltage for presentation to a or a respective AC phase of an AC network (50),
wherein the voltage source converter (30) includes a controller (60) programmed to selectively coordinate the operation of the DC and AC side sub-converters (38, 39) as the respective waveform synthesizers to simultaneously: synthesize one or more selected harmonic voltage components to control the or each DC side voltage so as to present a constant or substantially constant DC voltage (64) to the DC network (58); and cancel the or each selected harmonic voltage component from the or each AC side voltage so as to present a or a respective AC phase voltage (67) free of the or each selected harmonic voltage component to the corresponding AC phase of the AC network (50),
the voltage source converter (30) being **characterised in that** each limb further includes a winding (44) connected in series with the AC side sub-converter (39)
at the AC side (42) of the corresponding phase element (36), each winding (44) magnetically coupled to a respective one of a plurality of additional windings (46), and the plurality of additional windings (46) are electrically interconnected in a daisy chain arrangement, preferably a delta arrangement.

2. A voltage source converter according to claim 1, wherein the synthesis of one or more selected harmonic voltage components to control the or each DC side voltage so as to present a constant or substantially constant DC voltage (64) to the DC network (58) includes the control of the or each DC side voltage to take the form of a voltage waveform (62) constructed from a series of straight line voltage functions.

3. A voltage source converter according to Claim 2, wherein the voltage waveform (62) constructed from a series of straight line voltage functions is a rectified trapezoidal voltage waveform.

4. A voltage source converter according to any preceding claim, wherein the or each selected harmonic voltage component is a non-zero sequence harmonic voltage component.

5. A voltage source converter according to any preceding claim, wherein the controller (60) is programmed to selectively operate each DC side sub-converter (38) as a waveform synthesizer to control each DC side voltage so that the time shifts between each two consecutive DC side voltages are equal.

6. A voltage source converter according to any preceding claim wherein the controller (60) is programmed to selectively operate each DC side sub-converter (38) as a waveform synthesizer to control each DC side voltage so as to generate a plurality of imbalanced DC side voltages, preferably wherein the synthesis of one or more selected harmonic voltage components to control each DC side voltage so as to present a constant or substantially constant DC voltage (64) to the DC network (58) includes the control of each DC side voltage so as to generate the plurality of imbalanced DC side voltages.

7. A voltage source converter according to any preceding claim, wherein each limb further includes a reactor connected in series with the corresponding winding (44).

8. A voltage source converter according to any preceding claim, wherein the controller (60) is programmed to selectively operate each AC side sub-converter (39) as a waveform synthesizer to control the current in the corresponding winding so as to limit or block the circulation of one or more harmonic current components between the AC phases.

9. A voltage source converter according to any preceding claim, wherein the plurality of additional windings (46) are electrically connected in parallel.

10. A voltage source converter according to any preceding claim, wherein each winding (44) is magnetically coupled to at least one other of the plurality of windings (46).

11. A voltage source converter according to any preceding claim, wherein the controller (60) is programmed to selectively operate each AC side sub-converter (39) as a waveform synthesizer to control the voltage across the corresponding winding (44) to exchange power between the AC phases via the magnetically coupled windings (46).

12. A voltage source converter according to Claim 11 wherein exchanging power between the AC phases via the magnetically coupled windings (46) includes compensating for an imbalance between the AC phase voltages.

13. A voltage source converter according to Claim 11 or Claim 12, wherein the control of the voltage across the corresponding winding to exchange power between the AC phases via the magnetically coupled windings (46) includes injection of a zero sequence harmonic voltage component into the voltage across the corresponding winding (44).

14. A voltage source converter according to any preceding claim, wherein the controller (60) is programmed to selectively operate the or each AC side sub-converter (39) as a waveform synthesizer to control the or each AC side voltage so as to drive the voltage across the corresponding plurality of switching elements (40) to a zero or substantially zero value during the switching of the corresponding plurality of switching elements (40) and during the exchange of reactive power between the voltage source converter (30) and the AC network (50).

15. A voltage source converter according to any preceding claim, wherein the controller (60) is programmed to operate the or each AC side sub-converter (39) to provide a corresponding compensation voltage to vary a phase difference between the corresponding AC side (42) and AC phase voltages so as to maintain a zero net change in energy level of the AC side sub-converter (39) over a power cycle.

16. A voltage source converter according to any preceding claim, wherein the or each DC side sub-converter (38) is connected in parallel with the corresponding phase element (36) between the first and second DC terminals (32, 34).

17. A voltage source converter according to any preceding claim, wherein the plurality of limbs is connected in series between the first and second DC terminals (32, 34) so that the DC side voltages combine to form a summed DC voltage for presentation to the DC network (58).

18. A voltage source converter according to any preceding claim, wherein the plurality of switching elements in the or each phase element (36) includes two parallel-connected pairs of series-connected switching elements (40), a respective junction between each pair of series-connected switching elements (40) defines a respective AC terminal for connection to the corresponding AC phase of the AC network (50), and the or each AC side sub-converter (39) is connected in series with one or both of the corresponding AC terminals.

19. A voltage source converter according to any preceding claim, wherein each sub-converter (38, 39) includes at least one module (52), the or each module (52) includes at least one switching element (54) and at least one energy storage device (56), and the or each switching element (54) and the or each energy storage device (56) in the or each module (52) are arranged to be combinable to selectively provide a voltage source.

## Patentansprüche

1. Spannungsquellenwandler (30), umfassend einen ersten und zweiten Gleichstromanschluss (32, 34) zur Verbindung mit einem Gleichstromnetz (58), wobei der Spannungsquellenwandler (30) eine Vielzahl von Gliedern enthält, die in Reihe zwischen dem ersten und zweiten Gleichstromanschluss (32, 34) verbunden sind, wobei jedes Glied enthält:
ein Phasenelement (36), das eine Vielzahl von Schaltelementen (40) enthält, die schaltbar sind, um selektiv eine Gleichstromseiten-Spannung an einer Gleichstromseite des Phasenelements (36) und eine Wechselstromseiten-Spannung an einer Wechselstromseite (42) des Phasenelements (36) zu verbinden;
einen Gleichstromseiten-Sub-Wandler (38), der mit der Gleichstromseite des Phasenelements (36) verbunden ist, wobei der Gleichstromseiten-Sub-Wandler (38) konfiguriert ist, als ein Wellenformsynthesizer betreibbar zu sein, um die Gleichstromseiten-Spannung zu steuern, um so eine Gleichspannung (68) zur Präsentation an das Gleichstromnetz (58) zu bilden; und
einen Wechselstromseiten-Sub-Wandler (39) der mit der Wechselstromseite (42) des Phasenelements (36) verbunden ist, wobei der Wechselstromseiten-Sub-Wandler (39) konfiguriert ist, als ein Wellenformsynthesizer betreibbar zu sein, um die Wechselstromseiten-Spannung zu steuern, um so eine oder eine jeweilige Wechselphasenspannung zur Präsentation an ein oder eine jeweilige Wechselstromphase eines Wechselstromnetz(es) (50) zu bilden,
wobei der Spannungsquellenwandler (30) eine Steuerung (60) enthält, die programmiert ist, selektiv den Betrieb des Gleich- und Wechselstromseiten-Subwandlers (38, 39) als die jeweiligen Wellenformsynthesizer zu koordinieren, um gleichzeitig: eine oder mehrere ausgewählte harmonische Spannungskomponenten zu synthetisieren, um die oder jede Gleichstromseiten-Spannung zu steuern, um eine konstante oder im Wesentlichen konstante Gleichspannung (64) dem Gleichstromnetz (58) zu präsentieren; und die oder jede gewählte harmonische Spannungskomponente aus der oder jeder Wechselstromseiten-Spannung zu löschen, um eine oder eine jeweilige Wechselphasenspannung (67) frei von der oder jeder ausgewählten harmonischen Spannungskomponente der entsprechenden Wechselstromphase des Wechselstromnetzes (50) zu präsentieren,
der Spannungsquellenwandler (30) **dadurch gekennzeichnet ist, dass** jedes Glied weiter eine Wicklung (44) aufweist, die in Reihe mit dem Wechselstromseiten-Sub-Wandler (39) an der Wechselstromseite des entsprechenden Phasenelements (36) verbunden ist, wobei jede Wicklung (44) magnetisch an eine jeweilige einer Vielzahl von zusätzlichen Wicklungen (46) gekoppelt ist und die Vielzahl von zusätzlichen Wicklungen (46) elektrisch in einer Verkettungsanordnung, vorzugsweise einer Delta-Anordnung, verbunden sind.

2. Spannungsquellenwandler nach Anspruch 1, wobei die Synthese einer oder mehrerer ausgewählter harmonischer Spannungskomponenten zur Steuerung der oder jeder Gleichstromseiten-Spannung, um eine konstante oder im Wesentlichen konstante Gleichspannung (64) dem Gleichstromnetz (58) zu präsentieren, die Steuerung der oder jeder Gleichstromseiten-Spannung enthält, so dass diese die Form einer Spannungswellenform (62) annimmt, die aus einer Reihe von geradlinigen Spannungsfunktionen konstruiert ist.

3. Spannungsquellenwandler nach Anspruch 2, wobei die Spannungswellenform (62), die aus einer Reihe von geradlinigen Spannungsfunktionen konstruiert ist, eine gleichgerichtete trapezförmige Spannungswellenform ist.

4. Spannungsquellenwandler nach einem der vorstehenden Ansprüche, wobei die oder jede harmonische Spannungskomponente eine harmonische Spannungskomponente einer Sequenz ungleich null ist.

5. Spannungsquellenwandler nach einem der vorstehenden Ansprüche, wobei die Steuerung (60) programmiert ist, selektiv jeden Gleichstromseiten-Sub-Wandler (38) als einen Wellenformsynthesizer zu betreiben, um jede Gleichstromseiten-Spannung so zu steuern, dass die Zeitverschiebungen zwischen jeweils zwei aufeinanderfolgenden Gleichstromseiten-Spannungen gleich sind.

6. Spannungsquellenwandler nach einem der vorstehenden Ansprüche, wobei die Steuerung (60) programmiert ist, selektiv jeden Gleichstromseiten-Sub-Wandler (38) als einen Wellenformsynthesizer zu betreiben, um jede Gleichstromseiten-Spannung so zu steuern, dass eine Vielzahl von unausgeglichenen Gleichstromseiten-Spannungen erzeugt wird, wobei vorzugsweise die Synthese einer oder mehrerer ausgewählter harmonischer Spannungskomponenten, um jede Gleichstromseiten-Spannung zu steuern, um eine konstante oder im Wesentlichen konstante Gleichspannung (64) dem Gleichstromnetz (58) zu präsentieren, die Steuerung jeder Gleichstromseiten-Spannung beinhaltet, um die Vielzahl von unausgeglichenen Gleichstromseiten-Spannungen zu erzeugen.

7. Spannungsquellenwandler nach einem der vorstehenden Ansprüche, wobei jedes Glied weiter einen Reaktor beinhaltet, der in Reihe mit der entsprechenden Wicklung (44) verbunden ist.

8. Spannungsquellenwandler nach einem der vorstehenden Ansprüche, wobei die Steuerung (60) programmiert ist, selektiv jeden Wechselstromseiten-Sub-Wandler (39) als einen Wellenformsynthesizer zu betreiben, um den Strom in der entsprechenden Wicklung so zu steuern, dass der Kreislauf einer oder mehrerer harmonischer Stromkomponenten zwischen den Wechselstromphasen begrenzt oder blockiert wird.

9. Spannungsquellenwandler nach einem der vorstehenden Ansprüche, wobei die Vielzahl von zusätzlichen Wicklungen (46) elektrisch parallel verbunden ist.

10. Spannungsquellenwandler nach einem der vorstehenden Ansprüche, wobei jede Wicklung (44) magnetisch an zumindest eine andere der Vielzahl von Wicklungen (46) gekoppelt ist.

11. Spannungsquellenwandler nach einem der vorstehenden Ansprüche, wobei die Steuerung (60) programmiert ist, selektiv jeden Wechselstromseiten-Sub-Wandler (39) als einen Wellenformsynthesizer zu betreiben, um die Spannung über die entsprechende Wicklung (44) zu steuern, um Leistung zwischen den Wechselstromphasen über die magnetisch gekoppelten Wicklungen (46) auszutauschen.

12. Spannungsquellenwandler nach Anspruch 11, wobei ein Austausch von Leistung zwischen den Wechselstromphasen über die magnetisch gekoppelten Wicklungen (46) ein Ausgleichen einer Ungleichheit zwischen den Wechselphasenspannungen beinhaltet.

13. Spannungsquellenwandler nach Anspruch 11 oder Anspruch 12, wobei das Steuern der Spannung über die entsprechende Wicklung, um Leistung zwischen den Wechselstromphasen über die magnetisch gekoppelten Wicklungen (46) auszutauschen, Einspeisen einer harmonischen Null-Sequenzspannungskomponente in die Spannung über die entsprechende Wicklung (44) beinhaltet.

14. Spannungsquellenwandler nach einem der vorstehenden Ansprüche, wobei die Steuerung (60) programmiert ist, selektiv den oder jeden Wechselstromseiten-Sub-Wandler (39) als einen Wellenformsynthesizer zu betreiben, um die oder jede Wechselstromseiten-Spannung zu steuern, um die Spannung über die entsprechende Vielzahl von Schaltelementen (40) zu einem Null- oder im Wesentlichen Nullwert während des Umschaltens der entsprechenden Vielzahl von Schaltelementen (40) zu schalten.

15. Spannungsquellenwandler nach einem der vorstehenden Ansprüche, wobei die Steuerung (60) programmiert ist, den oder jeden Wechselstromseiten-Sub-Wandler (39) zu betreiben, um eine entsprechende Ausgleichsspannung bereitzustellen, um eine Phasendifferenz zwischen den entsprechenden Wechselstromseiten- (42) und Wechselphasenspannungen zu variieren, um eine Nullnettoänderung im Energiepegel des Wechselstromseiten-Sub-Wandlers (39) über einen Leistungszyklus aufrechtzuerhalten.

16. Spannungsquellenwandler nach einem der vorstehenden Ansprüche, wobei der oder jeder Gleichstromseiten-Sub-Wandler (38) parallel mit dem entsprechenden Phasenelement (36) zwischen dem ersten und zweiten Gleichstromanschluss (32, 34) verbunden ist.

17. Spannungsquellenwandler nach einem der vorstehenden Ansprüche, wobei die Vielzahl von Gliedern in Reihe zwischen dem ersten und zweiten Gleichstromanschluss (32, 34) verbunden ist, so dass die Gleichstromseiten-Spannungen kombiniert werden, um eine summierte Gleichspannung zur Präsentation an das Gleichstromnetz (58) zu bilden.

18. Spannungsquellenwandler nach einem der vorstehenden Ansprüche, wobei die Vielzahl von Schaltelementen in dem oder jedem Phasenelement (36) zwei parallel verbundene Paare von in Reihe verbundenen Schaltelementen (40) beinhaltet, ein jeweiliger Übergang zwischen jedem Paar von in Reihe verbundenen Schaltelementen (40) einen jeweiligen Wechselstromanschluss zur Verbindung mit der entsprechenden Wechselstromphase des Wechselstromnetzes (50) definiert und der oder jeder Wechselstromseiten-Sub-Wandler (39) in Reihe mit einem oder beiden der entsprechenden Wechselstromanschlüsse verbunden ist.

19. Spannungsquellenwandler nach einem der vorstehenden Ansprüche, wobei jeder Sub-Wandler (38, 39) zumindest ein Modul (52) beinhaltet, wobei das oder jedes Modul (52) zumindest ein Schaltelement (54) und zumindest eine Energiespeichervorrichtung (56) beinhaltet und das oder jedes Schaltelement (54) und die oder jede Energiespeichervorrichtung (56) in dem oder jedem Modul (52) angeordnet sind, kombinierbar zu sein, um selektiv eine Spannungsquelle bereitzustellen.

## Revendications

1. Convertisseur de source de tension (30) comprenant des première et seconde bornes CC (32, 34) pour connexion à un réseau CC (58), le convertisseur de source de tension (30) incluant une pluralité de branches connectées en série entre les première et seconde bornes CC (32, 34), chaque branche incluant :
un élément de phase (36) incluant une pluralité d'éléments de commutation (40) pouvant être commutés pour interconnecter sélectivement une tension côté CC au niveau d'un côté CC de l'élément de phase (36) et une tension côté CA au niveau d'un côté CA (42) de l'élément de phase (36) ;
un sous-convertisseur côté CC (38) connecté au côté CC de l'élément de phase (36), le sous-convertisseur côté CC (38) étant configuré pour pouvoir servir de synthétiseur de forme d'onde pour commander la tension côté CC de manière à former une tension CC (68) pour présentation au réseau CC (58) ; et
un sous-convertisseur côté CA (39) connecté au côté CA (42) de l'élément de phase (36), le sous-convertisseur côté CA (39) étant configuré pour pouvoir servir de synthétiseur de forme d'onde pour commander la tension côté CA de manière à former une tension de phase CA ou une tension de phase CA respective pour présentation à une phase CA ou une phase CA respective d'un réseau CA (50),
dans lequel le convertisseur de source de tension (30) inclut un dispositif de commande (60) programmé pour coordonner sélectivement le fonctionnement des sous-convertisseurs côté CC et CA (38, 39) en tant que synthétiseurs de forme d'onde respectifs pour simultanément : synthétiser une ou plusieurs composantes de tension harmoniques sélectionnées pour commander la ou chaque tension côté CC de manière à présenter une tension CC constante ou sensiblement constante (64) au réseau CC (58) ; et annuler la ou chaque composante de tension harmonique sélectionnée de la ou chaque tension côté CA de manière à présenter une tension de phase CA ou une tension de phase CA respective (67) dépourvue de la ou chaque composante de tension harmonique sélectionnée à la phase CA correspondante du réseau CA (50),
le convertisseur de source de tension (30) étant **caractérisé en ce que** chaque branche inclut en outre un enroulement (44) connecté en série avec le sous-convertisseur côté CA (39) au niveau du côté CA (42) de l'élément de phase correspondant (36), chaque enroulement (44) étant magnétiquement couplé à un respectif d'une pluralité d'enroulements supplémentaires (46), et la pluralité d'enroulements supplémentaires (46) sont électriquement interconnectés selon un agencement en guirlande, de préférence un agencement en triangle.

2. Convertisseur de source de tension selon la revendication 1, dans lequel la synthèse d'une ou plusieurs composantes de tension harmoniques sélectionnées pour commander la ou chaque tension côté CC de manière à présenter une tension CC constante ou sensiblement constante (64) au réseau CC (58) inclut la commande de la ou chaque tension côté CC pour prendre la forme d'une forme d'onde de tension (62) construite à partir d'une série de fonctions de tension à ligne droite.

3. Convertisseur de source de tension selon la revendication 2, dans lequel la forme d'onde de tension (62) construite à partir d'une série de fonctions de tension à ligne droite est une forme d'onde de tension trapézoïdale redressée.

4. Convertisseur de source de tension selon l'une quelconque des revendications précédentes, dans lequel la ou chaque composante de tension harmonique sélectionnée est une composante de tension harmonique de séquence non nulle.

5. Convertisseur de source de tension selon l'une quelconque des revendications précédentes, dans lequel le dispositif de commande (60) est programmé pour faire fonctionner sélectivement chaque sous-convertisseur côté CC (38) en tant que synthétiseur de forme d'onde pour commander chaque tension côté CC de telle sorte que les décalages temporels entre deux tensions côté CC consécutives sont égaux.

6. Convertisseur de source de tension selon l'une quelconque des revendications précédentes dans lequel le dispositif de commande (60) est programmé pour faire fonctionner sélectivement chaque sous-convertisseur côté CC (38) en tant que synthétiseur de forme d'onde pour commander chaque tension côté CC de manière à générer une pluralité de tensions côté CC déséquilibrées, de préférence dans lequel la synthèse d'une ou plusieurs composantes de tension harmoniques sélectionnées pour commander chaque tension côté CC de manière à présenter une tension CC constante ou sensiblement constante (64) au réseau CC (58) inclut la commande de chaque tension côté CC de manière à générer la pluralité de tensions côté CC déséquilibrées.

7. Convertisseur de source de tension selon l'une quelconque des revendications précédentes, dans lequel chaque branche inclut en outre un réacteur connecté en série avec l'enroulement (44) correspondant.

8. Convertisseur de source de tension selon l'une quelconque des revendications précédentes, dans lequel le dispositif de commande (60) est programmé pour faire fonctionner sélectivement chaque sous-convertisseur côté CA (39) en tant que synthétiseur de forme d'onde pour commander le courant dans l'enroulement correspondant de manière à limiter ou bloquer la circulation d'une ou plusieurs composantes de courant harmoniques entre les phases CA.

9. Convertisseur de source de tension selon l'une quelconque des revendications précédentes, dans lequel la pluralité d'enroulements supplémentaires (46) sont électriquement connectés en parallèle.

10. Convertisseur de source de tension selon l'une quelconque des revendications précédentes, dans lequel chaque enroulement (44) est magnétiquement couplé à au moins un autre de la pluralité d'enroulements (46).

11. Convertisseur de source de tension selon l'une quelconque des revendications précédentes, dans lequel le dispositif de commande (60) est programmé pour faire fonctionner sélectivement chaque sous-convertisseur côté CA (39) en tant que synthétiseur de forme d'onde pour commander la tension à travers l'enroulement (44) correspondant pour échanger de la puissance entre les phases CA via les enroulements magnétiquement couplés (46).

12. Convertisseur de source de tension selon la revendication 11, dans lequel l'échange de puissance entre les phases CA via les enroulements magnétiquement couplés (46) inclut la compensation d'un déséquilibre entre les tensions de phase CA.

13. Convertisseur de source de tension selon la revendication 11 ou la revendication 12, dans lequel la commande de la tension à travers l'enroulement correspondant pour échanger de la puissance entre les phases CA via les enroulements magnétiquement couplés (46) inclut l'injection d'une composante de tension harmonique de séquence nulle dans la tension à travers l'enroulement (44) correspondant.

14. Convertisseur de source de tension selon l'une quelconque des revendications précédentes, dans lequel le dispositif de commande (60) est programmé pour faire fonctionner sélectivement le ou chaque sous-convertisseur côté CA (39) en tant que synthétiseur de forme d'onde pour commander la ou chaque tension côté CA de manière à entraîner la tension à travers la pluralité correspondante d'éléments de commutation (40) à une valeur nulle ou sensiblement nulle durant la commutation de la pluralité correspondante d'éléments de commutation (40) et durant l'échange de puissance de réaction entre le convertisseur de source de tension (30) et le réseau CA (50).

15. Convertisseur de source de tension selon l'une quelconque des revendications précédentes, dans lequel le dispositif de commande (60) est programmé pour faire fonctionner le ou chaque sous-convertisseur côté CA (39) pour fournir une tension de compensation correspondante pour faire varier une différence de phase entre le côté CA (42) et les tensions de phase CA correspondants de manière à maintenir un changement net nul du niveau d'énergie du sous-convertisseur côté CA (39) sur un cycle d'alimentation.

16. Convertisseur de source de tension selon l'une quelconque des revendications précédentes, dans lequel le ou chaque sous-convertisseur côté CC (38) est connecté en parallèle à l'élément de phase (36) correspondant entre les première et seconde bornes CC (32, 34).

17. Convertisseur de source de tension selon l'une quelconque des revendications précédentes, dans lequel la pluralité de branches sont connectées en série entre les première et seconde bornes CC (32, 34) de telle sorte que les tensions côté CC se combinent pour former une tension CC totalisée pour présentation au réseau CC (58).

18. Convertisseur de source de tension selon l'une quelconque des revendications précédentes, dans lequel la pluralité d'éléments de commutation dans le ou chaque élément de phase (36) incluent deux paires connectées en parallèle d'éléments de commutation connectés en série (40), une jonction respective entre chaque paire d'éléments de commutation connectés en série (40) définit une borne CA respective pour connexion à la phase CA correspondante du réseau CA (50) et le ou chaque sous-convertisseur côté CA (39) est connecté en série à l'une ou les deux des bornes CA correspondantes.

19. Convertisseur de source de tension selon l'une quelconque des revendications précédentes, dans lequel chaque sous-convertisseur (38, 39) inclut au moins un module (52), le ou chaque module (52) inclut au moins un élément de commutation (54) et au moins un dispositif de stockage d'énergie (56), et le ou chaque élément de commutation (54) et le ou chaque élément de stockage d'énergie (56) dans le ou chaque module (52) sont agencés pour être combinables pour fournir sélectivement une source de tension.
